# EUROPEAN PATENT APPLICATION

(11) **EP 4 746 054 A1**
(43) Date of publication of application: **20.05.2026**
(21) Application number: 25213821.9
(22) Date of filing: 06.11.2025
(51) Int. Cl.: H01M 4/04, H01M 4/139, H01M 4/62

(54) **METHOD FOR MANUFACTURING ELECTRODE PLATE AND ELECTRODE ASSEMBLY USING THE SAME**

(30) Priority: 12.11.2024 KR 20240160118
(71) Applicant: SAMSUNG SDI CO., LTD., Yongin-si, Gyeonggi-do 17084 (KR)
(72) Inventor: LEE, Youjin, 17084 Yongin-Si, Gyeonggi-do (KR); JEONG, Hyunki, 17084 Yongin-Si, Gyeonggi-do (KR)
(74) Representative: Michalski Hüttermann & Partner Patentanwälte mbB

(57) **Abstract**

A method for manufacturing an electrode plate includes: placing a first active material layer on a first side of a substrate; drying the first active material layer coated on the first side of the substrate; placing a first ceramic coating layer on the first active material layer; and placing a second active material layer on a second side of the substrate opposite the first side.
Furthermore, the invention is directed to an electrode assembly.

## Description

### BACKGROUND

### 1. Field

Aspects of embodiments of the present disclosure relate to a method for manufacturing an electrode plate, and an electrode assembly including the electrode plate.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are used in various environments due to having excellent electrical characteristics, but comparative small batteries may have a limitation in an energy density that can be designed. Because the amount of electric energy that may be stored may be limited relative to a size and a weight of the battery, there is a gradually increasing demand in application fields, such as electric vehicles, for larger batteries having higher energy density.

The above information disclosed in this Background section is for enhancement of understanding of the background of the present disclosure, and therefore, it may contain information that does not constitute related (or prior) art.

### SUMMARY

If (e.g., when) a thermal runaway occurs in a large battery having a high energy density, it may be difficult to extinguish a fire that may be caused due to a high fire intensity.

Embodiments of the present disclosure may be directed to a method for manufacturing an electrode plate, and an electrode assembly including the electrode plate.

These and other aspects and features of the present disclosure will be described in or will be apparent from the following description of embodiments of the present disclosure.

According to one or more embodiments of the present disclosure, a method for manufacturing an electrode plate includes: placing a first active material layer on a first side of a substrate; drying the first active material layer coated on the first side of the substrate; placing a first ceramic coating layer on the first active material layer; and placing a second active material layer on a second side of the substrate opposite the first side.

In an embodiment, the placing of the first ceramic coating layer and the placing of the second active material layer may be performed concurrently with each other.

In an embodiment, the method may further include concurrently drying the first ceramic coating layer and the second active material layer with each other.

In an embodiment, the first active material layer, the second active material layer, and the first ceramic coating layer may be dried through a same drying furnace.

In an embodiment, the first ceramic coating layer may include a thin film.

In an embodiment, a thickness of the first ceramic coating layer may range from 2 µm to 4 µm.

In an embodiment, the first ceramic coating layer may be placed using a gravure coating or a spray coating.

In an embodiment, the method may further include pressing the substrate on which the first active material layer, the second active material layer, and the first ceramic coating layer are placed.

In an embodiment, the method may further include cutting the pressed substrate.

In an embodiment, the method may further include placing a second ceramic coating layer on the second active material layer.

According to one or more embodiments of the present disclosure, an electrode assembly includes: a first electrode plate; a second electrode plate having a polarity different from that of the first electrode plate; and a separator interposed between the first electrode plate and the second electrode plate. The first electrode plate includes: a substrate, a first active material layer on a first side of the substrate, a second active material layer on a second side of the substrate opposite the first side, and a first ceramic coating layer on the first active material layer.

In an embodiment, the first electrode plate, the second electrode plate, and the separator may be wound together, and the first side of the substrate on which the first ceramic coating layer is located may face a core-winding direction.

In an embodiment, a total composition density of the first active material layer may be different from a total composition density of the second active material layer.

In an embodiment, the total composition density of the first active material layer may be lower than the total composition density of the second active material layer.

In an embodiment, the separator may include a polyethylene PE material.

In an embodiment, a thickness of the first ceramic coating layer may be based on a thickness of the separator.

In an embodiment, the first ceramic coating layer may include a thin film.

In an embodiment, the first electrode plate may correspond to a dry electrode plate.

In an embodiment, the first electrode plate may further include a second ceramic coating layer on the second active material layer.

In an embodiment, the first ceramic coating layer may include a ceramic powder and a binder.

According to some embodiments of the present disclosure, by placing a ceramic coating layer on one side of a substrate, a heat resistance, a mechanical strength, an ionic conductivity, a chemical resistance, and/or the like of an electrode plate may be enhanced. Accordingly, safety of a secondary battery including the electrode plate may be improved.

According to some embodiments of the present disclosure, by placing an active material layer and a ceramic coating layer on both sides (e.g., opposite sides) of a substrate in a single process, the process may be simplified.

According to some embodiments of the present disclosure, by placing a ceramic coating layer in a core-winding direction, a short risk that may be caused by a deterioration of the electrode assembly may be reduced.

According to some embodiments of the present disclosure, a ceramic coating layer may be placed on both sides (e.g., opposite sides) of a substrate. Accordingly, safety of a secondary battery including the electrode plate may be improved.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an example of a process related to a method for manufacturing an electrode plate according to an embodiment of the present disclosure.
FIG. 2 illustrates an example of an electrode plate according to an embodiment of the present disclosure.
FIG. 3 illustrates an example of a secondary battery including an electrode assembly according to an embodiment of the present disclosure.
FIG. 4 is a cross-sectional view illustrating an example of an electrode assembly according to an embodiment of the present disclosure.
FIG. 5 illustrates an example of a total composition density of a wound electrode plate according to an embodiment of the present disclosure.
FIG. 6 illustrates an example of a process related to a method for manufacturing an electrode plate according to an embodiment of the present disclosure.
FIG. 7 illustrates an example of an electrode plate according to an embodiment of the present disclosure.
FIG. 8 is a flowchart illustrating an example of a method for manufacturing an electrode plate according to an embodiment of the present disclosure.
FIG. 9 is a flowchart illustrating an example of a method for manufacturing an electrode plate according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The sizes and relative sizes of layers and regions shown in the drawings may be exaggerated for clarity of illustration. In other words, the sizes shown in the drawings are provided for convenience of illustration, but the present disclosure is not limited thereto. In addition, the same reference numerals throughout the specification may refer to the same components.

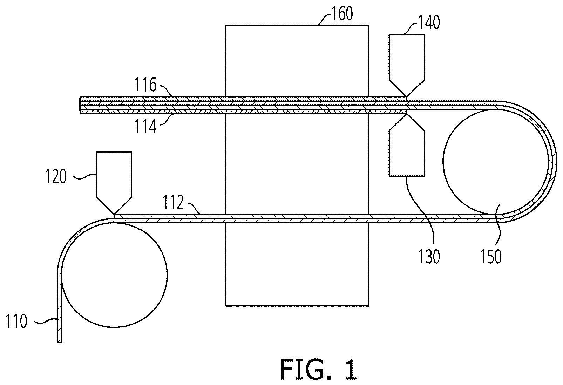

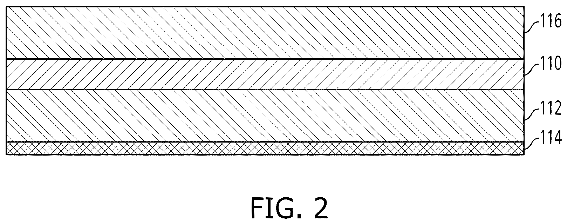

FIG. 1 illustrates an example of a process related to a method for manufacturing an electrode plate according to an embodiment of the present disclosure. FIG. 2 illustrates an example of an electrode plate according to an embodiment of the present disclosure.

In an embodiment, the method for manufacturing the electrode plate may commence by placing a first active material layer 112 on a first side of a substrate 110. The first active material layer 112 may be placed on the first side by coating an active material, discharged from a first coater 120, onto the first side of the substrate 110. For example, if (e.g., when) the electrode plate to be manufactured is a positive electrode plate, the substrate 110 may be a positive substrate (e.g., a positive current collector), and the active material discharged from the first coater 120 may be a positive active material. As another example, if (e.g., when) the electrode plate to be manufactured is a negative electrode plate, the substrate 110 may be a negative substrate (e.g., a negative current collector), and the active material discharged from the first coater 120 may be a negative active material. The first active material layer 112 coated on the first side of the substrate 110 may be dried through a drying furnace 160.

In an embodiment, a ceramic coating layer 114 may be placed on the first active material layer 112 coated on the first side of the substrate 110. In addition, a second active material layer 116 may be placed on a second side of the substrate 110 opposite to the first side. The ceramic coating layer 114 may be placed on the first active material layer 112 by coating a colloidal solution (e.g., a Sol-Gel solution) discharged from a second coater 130 onto the first active material layer 112 coated on the substrate 110. The ceramic coating layer 114 may be placed using a gravure coating or a spray coating.

The ceramic coating layer 114 may include a ceramic powder, a binder, and a dispersion medium. The ceramic powder may include at least one or more of alpha alumina, zirconia, silica, titanium oxide, zeolite, or barium titanate. Because the decomposition temperature of the ceramic material may be greater than or equal to 1000 degrees (Celsius), even if (e.g., when) the internal temperature of the battery rises when an internal short circuit occurs, there may be no risk of the ceramic coating layer shrinking or expanding. The binder may include an alkylene oxide polymer or copolymer. The binder may include one of a butyl acrylate polymer or an ethylhexyl acrylate polymer, or may include both of them. The dispersion medium may include NMP (n-methyl-2-pyrrolidinone) or cyclohexanone. The dispersion medium may be volatilized during a drying process. The ceramic coating layer 114 may be a layer placed on the active material layer, and may be a layer that rapidly holds an electrolyte by increasing a porosity of the electrode.

The second active material layer 116 may be placed on the second side of the substrate 110 by coating an active material, discharged from a third coater 140, onto the second side of the substrate 110. The active material included in the first active material layer 112 and the active material included in the second active material layer 116 may be the same as each other or may be different from each other.

In an embodiment, the ceramic coating layer 114 and the second active material layer 116 may be placed concurrently (e.g., simultaneously or substantially simultaneously) with each other. The ceramic coating layer 114 and the second active material layer 116 may be placed on the substrate 110 in the same process. The substrate 110 on which the first active material layer 112, the ceramic coating layer 114, and the second active material layer 116 are placed may be pressed. Additionally, the substrate (that is, the electrode plate) on which the first active material layer 112, the ceramic coating layer 114, and the second active material layer 116 are placed and pressed may be cut.

In an embodiment, the ceramic coating layer 114 and the second active material layer 116 may be concurrently (e.g., simultaneously or substantially simultaneously) dried with each other through the drying furnace 160. In this case, the first active material layer 112, the ceramic coating layer 114, and the second active material layer 116 may be dried through the same drying furnace 160. In more detail, after the substrate 110 on which the first active material layer 112 is placed passes through the drying furnace 160, a traveling direction of the substrate 110 may be adjusted by a roller 150 so that the substrate 110 passes through the drying furnace 160 again. Then, the substrate 110 on which the first active material layer 112, the ceramic coating layer 114, and the second active material layer 116 are placed may pass through the drying furnace 160.

In an embodiment, referring to FIG. 2, the ceramic coating layer 114 may be a thin film. For example, a thickness of the ceramic coating layer 114 may range from 2 µm to 4 µm, but the present disclosure is not limited thereto. In addition, the thickness of the ceramic coating layer 114 may be smaller than a thicknesses of the first active material layer 112 and the second active material layer 116.

For example, the electrode plate may correspond to a positive electrode for a lithium secondary battery or a negative electrode for a lithium secondary battery. A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum Al but is not limited thereto.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiaCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt% to about 99 wt% of a negative electrode active material, about 0.5 wt% to about 5 wt% of a binder, and about 0 wt% to about 5 wt% of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, a conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

Si-based negative electrode active material or Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be a silicon particle and amorphous carbon coated on the surface of the silicon particle.

The silicon-carbon composite may further include crystalline carbon. For example, the silicon-carbon composite may include a core including crystalline carbon and a silicon particle and an amorphous carbon coating layer on the surface of the core.

By placing a ceramic coating layer on one side of the substrate as described above, a heat resistance, a mechanical strength, an ionic conductivity, a chemical resistance, and/or the like of the electrode plate may be enhanced. Accordingly, the safety of a secondary battery including the electrode plate may be improved. In addition, by placing an active material layer and a ceramic coating layer on both sides (e.g., on opposite sides) of the substrate in one process, the process may be simplified.

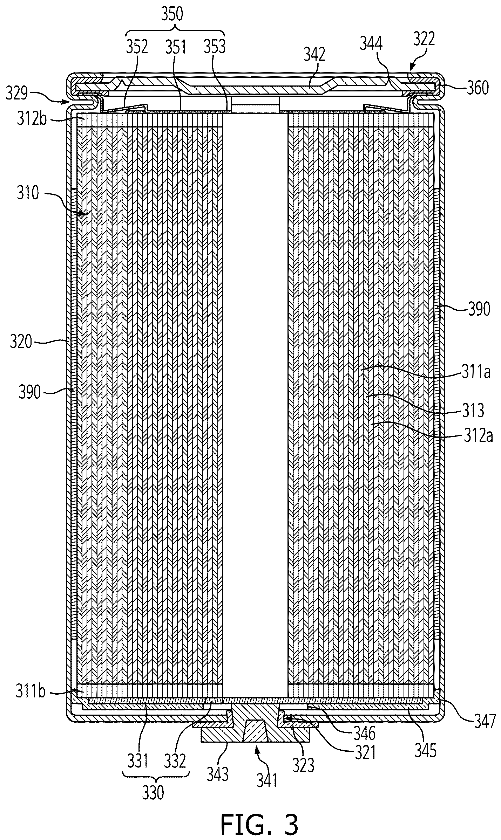

FIG. 3 illustrates an example of a secondary battery including an electrode assembly 310 according to an embodiment of the present disclosure. Referring to FIG. 3, the secondary battery according to an embodiment of the present disclosure includes an electrode assembly 310 that performs charging and discharging, a case 320 for accommodating the electrode assembly 310, a first current collecting plate 330 and a second current collecting plate 350 that are connected to the electrode assembly 310, an electrode terminal 341, a vent cap plate 342, and a gasket 360. In FIG. 3, the vent cap plate 342 is illustrated as being disposed on an upper portion of the secondary battery, and the electrode terminal 341 is illustrated as being disposed on a lower portion of the secondary battery, but the present disclosure is not limited thereto. Depending on the usage environment or requirements of the secondary battery, the vent cap plate 342 and the electrode terminal 341 may each be variously modified to be disposed on a lower portion and an upper portion, respectively, of the secondary battery.

In an embodiment, the electrode assembly 310 is formed in a cylindrical jelly roll state having an empty core-winding portion by winding a first electrode plate 311a, 311b, a separator 313, and a second electrode plate 312a, 312b. The first electrode plate 311a, 311b and the second electrode plate 312a, 312b include a coated portion 311a, 312a in which an active material is coated on both sides (e.g., opposite sides) of a thin metal plate forming a substrate, and an uncoated portion 311b, 312b in which an active material is not coated so that the substrate is exposed. In addition, the separator 313 may be interposed between the first electrode plate 311a, 311b and the second electrode plate 312a, 312b.

In an embodiment, the first electrode plate 311a, 311b may be an electrode corresponding to either a positive electrode or a negative electrode in the secondary battery. The second electrode plate 312a, 312b may be an electrode having a polarity different from that of the first electrode plate 311a, 311b. For example, if (e.g., when) the first electrode plate 311a, 311b is a positive electrode, the second electrode plate 312a, 312b may be a negative electrode. On the other hand, if (e.g., when) the first electrode plate 311a, 311b is a negative electrode, the second electrode plate 312a, 312b may be a positive electrode.

In an embodiment, the first electrode plate 311a, 311b may form a positive electrode by coating a positive active material on an aluminum Al substrate, and the second electrode plate 312a, 312b may form a negative electrode by coating a negative active material on a copper Cu substrate. The uncoated portion 311b of the first electrode plate and the uncoated portion 312b of the second electrode plate are respectively provided at both axial ends (e.g., opposite axial ends) of the electrode assembly 310 in a winding direction, but the electrode terminal 341 and the case 320, which have different polarities from each other while facing the same direction as each other, may be provided together. The vent cap plate 342 may be disposed on a side opposite that of the electrode terminal 341.

In an embodiment, the first electrode plate 311a, 311b and the second electrode plate 312a, 312b may have the same or similar configuration as that of the electrode plate described above with reference to FIGS. 1 and 2. For example, the first coated portion 311a may include a substrate (e.g., a positive substrate or a negative substrate), a first active material layer placed on a first side of the substrate, a second active material layer placed on a second side of the substrate opposite the first side, and a ceramic coating layer placed on the first active material layer. The second coated portion 312a may also have the same or similar configuration as that of the first coated portion 311a.

In an embodiment, the case 320 may be formed in a cylindrical shape to accommodate the electrode assembly 310, and the electrode terminal 341 and the vent cap plate 342 may be respectively provided at both axial ends (e.g., opposite axial ends) of the case 320 so as to be opposite to each other. A diameter of the case 320 may be 40 mm-50 mm, but the present disclosure is not limited thereto.

In an embodiment, the electrode terminal 341 may be connected to the first electrode plate 311a, 311b by the first current collecting plate 330 via a rivet 343, and the case 320 may be connected to the second electrode plate 312a, 312b by the second current collecting plate 350. In this case, the vent cap plate 342 may be electrically spaced apart from the second current collecting plate 350 and the case 320, so that the vent cap plate 342 may not have a polarity.

In an embodiment, the electrode terminal 341 that is connected to the first electrode plate 311a, 311b of the electrode assembly 310 inserted into the case 320 from the outside may be provided at one side of the case 320. The case 320 may have a through-hole 321 partially opened at one side of the case 320.

In an embodiment, the electrode terminal 341 may be installed in the through-hole 321 of the case 320 via a rivet structure. As such, the electrode terminal 341 may be connected to the rivet 343. One end of the rivet 343 may be welded to the first current collecting plate 330, and may be arranged so as to penetrate the through-hole 321. The electrode terminal 341 may be connected to the rivet 343, and may be disposed outside the case 320. The electrode terminal 341 may be formed to protrude beyond the outer side of the case 320 around the through-hole 321, and may be used as a positive electrode terminal. In this case, the first current collecting plate 330 may be a positive current collecting plate.

In an embodiment, the first current collecting plate 330 is electrically connected to the uncoated portion 311b of the first electrode plate via the rivet 343, and is electrically and mechanically connected to the electrode terminal 341. The first current collecting plate 330 may be in contact with most of the uncoated portion 311b of the first electrode plate to reduce a resistance, and may be electrically connected to the electrode terminal 341. The rivet 343 of the electrode terminal 341 may be installed in the through-hole 321 with an insulator 323 interposed therebetween to form a hermetic structure against the electrolyte, while being electrically insulated from the case 320.

In an embodiment, the insulator 323 may be formed of a polymer including an ethylene propylene rubber, polypropylene (PP), polyimide (PI), polyethylene terephthalate (PET), polycarbonate (PC), or a suitable combination thereof. As another example, the insulator 323 may be formed of a ceramic material including an epoxy resin, alumina Al2O3, zirconia ZrO2, an aramid fiber, Nomex, or a suitable combination thereof. However, the material of the insulator 323 is not limited to the above-listed materials, and various suitable materials having excellent plasticity and insulation properties may be selectively used.

In an embodiment, the first current collecting plate 330 may include a metal plate 331 including at least one bridge 332. For example, the first current collecting plate 330 may be made of a conductive metal, such as nickel, aluminum, copper, silver, zinc, tin, stainless steel (e.g., SUS), a steel plated with nickel, or a suitable combination (e.g., an alloy) thereof. In addition, the metal plate 331 and the bridge 332 constituting the first current collecting plate 330 may both be made of the same material as each other and may be formed integrally with each other.

In an embodiment, the bridge 332 of the first current collecting plate 330 may be configured to break when a current exceeding a threshold value (e.g., a set or predetermined value) flows. For example, in a normal operation, the bridge 332 operates as part of a circuit through which a current flows, but if (e.g., when) an excessive current flows, the bridge 332 may melt due to heat being generated, performing a fuse function that interrupts the circuit.

In an embodiment, an insulating tape 345 may be attached to one side of the first current collecting plate 330. The insulating tape 345 may be interposed between the first current collecting plate 330 and the case 320, or between the uncoated portion 311b of the first electrode plate and the case 320, and may serve to electrically insulate these components. In an embodiment, a central portion of the insulating tape 345 may include a perforation 346 corresponding to the shape of the rivet 343, so that the rivet 343 may contact the first current collecting plate 330. In addition, the insulating tape 345 may include a sidewall 347 wrapping around a portion of the electrode assembly 310.

In an embodiment, the case 320 includes an opening 322 that is fully open on one side of the case 320 to allow insertion of the electrode assembly 310. After the electrode assembly 310 is inserted into the case 320, the vent cap plate 342 may seal the opening 322, and may be electrically separated or insulated from the case 320.

In an embodiment, the second current collecting plate 350 is electrically connected to the uncoated portion 312b of the second electrode plate, and is electrically connected to the case 320. The second current collecting plate 350 may be in contact with most of the uncoated portion 312b of the second electrode plate to reduce a resistance, and may be connected to the case 320.

In an embodiment, the second current collecting plate 350 includes a bottom portion 351 welded to the uncoated portion 312b of the second electrode plate, and a wing portion 352 formed adjacent to the bottom portion 351 to be welded to a beading portion 329. The second current collecting plate 350 may be formed by cutting and bending a circular plate, and includes a plurality of bottom portions 351 and wing portions 352 that are alternately arranged in a circumferential direction. In an embodiment, the wing portion 352 may be repeatedly bent in an axial direction (e.g., an upward direction) of the electrode assembly 310 and in a radial direction (e.g., an outward direction).

In an embodiment, when the uncoated portion 312b of the second electrode plate and the bottom portion 351 of the second current collecting plate 350 are welded together, the bottom portion 351 may form a weld line in a diameter direction of the second current collecting plate 350. Accordingly, the bottom portion 351 may be uniformly connected to the uncoated portion 312b of the second electrode plate along the circumferential direction, and the wing portion 352 may be uniformly connected to the beading portion 329 along the circumferential direction. Along the entire area of the uncoated portion 312b of the second electrode plate and the beading portion 329 of the case 320, a uniform or substantially uniform current flow along the circumferential direction may be possible.

In an embodiment, the second current collecting plate 350 has a hole 353 in a center thereof to absorb or alleviate a deformation that may be caused by welding of the bottom portion 351 to the uncoated portion 312b of the second electrode plate, and a vibration and an impact that may be transferred between the wing portion 352 and the bottom portion 351. The hole 353 may have a suitable size in a suitable range that may absorb the vibration and the impact, without increasing a current resistance between the wing portion 352 and the bottom portion 351.

In an embodiment, the vent cap plate 342 is electrically separated from the second current collecting plate 350, and is installed in the opening 322 of the case 320 by a crimping process. As another example, the vent cap plate 342 may be installed in the opening 322 of the case 320 through a welding process. Due to a connection of the second current collecting plate 350, the case 320 may be used as a negative electrode terminal. In this case, the second current collecting plate 350 may be a negative current collecting plate.

In an embodiment, the vent cap plate 342 may have a notch 344 formed on an inner side thereof. The notch 344 may be open to discharge an internal pressure of the secondary battery to the outside when an abnormal event occurs in the secondary battery, preventing or substantially preventing a secondary explosion. In more detail, the notch 344 may receive a concentrated internal pressure upon an abnormal event so as to be easily open. The notch 344 may be formed over the entire area of the vent cap plate 342 along the circumferential direction, or a plurality of notches 344 may be formed at suitable intervals (e.g., predetermined intervals).

In an embodiment, the gasket 360 is interposed between the second current collecting plate 350 and the vent cap plate 342, and between the second current collecting plate 350 and the case 320. The gasket 360 performs a sealing action by means of the beading portion 329 or the crimping process. In addition, the gasket 360 may form a hermetic structure against the electrolyte between the second current collecting plate 350 and the opening 322 of the case 320. For example, the gasket 360 may include a polymer material or ceramic material, such as polyvinyl chloride (PVC), polytetrafluoroethylene (PTFE or Teflon), polyethylene (PE), an epoxy resin, silicone, polyvinylidene fluoride (PVDF), polypropylene (PP), polyacrylonitrile (PAN), polyethylene oxide (PEO), or the like, but the present disclosure is not limited thereto, and may include any suitable compound used as an insulating material as would be understood by those having ordinary skill in the art.

In an embodiment, a finishing tape 390 may be attached to wrap around an outer side of the jelly roll of the electrode assembly 310 at least once. In addition, the electrode assembly 310 may be inserted into the case 320 in a state in which the finishing tape 390 is attached, and the finishing tape 390 may be located between the electrode assembly 310 and the case 320. Thus, in the assembled secondary battery, the electrode assembly 310 may not move up and down or back and forth inside the case 320, thereby preventing or substantially preventing a separation of a terminal or damage to a component. Further, even in a state in which the electrode assembly 310 expands during charging and discharging, cracks in the case 320 or the electrode assembly 310 due to an excessive expansion of the electrode assembly 310 may be suppressed. However, the finishing tape 390 may be omitted as needed or desired depending on the structure of the electrode assembly 310.

A secondary battery according to an embodiment of the present disclosure may be applied to automobiles, mobile phones, various suitable kinds of electrical devices, and/or the like, but the present disclosure is not limited thereto.

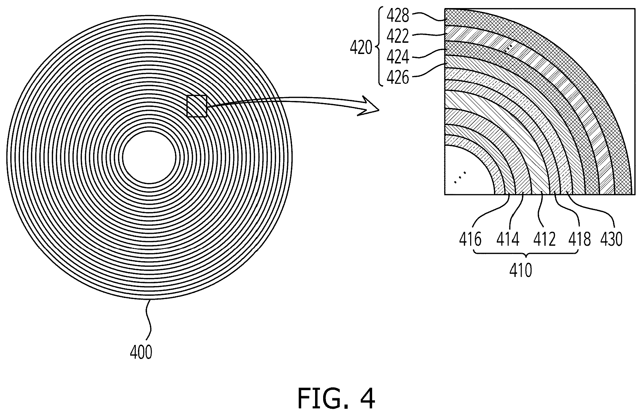

FIG. 4 is a cross-sectional view illustrating an example of an electrode assembly 400 according to an embodiment of the present disclosure.

In an embodiment, the electrode assembly 400 may include a first electrode plate 410, a second electrode plate 420 having a polarity different from that of the first electrode plate 410, and a separator 430 interposed between the first electrode plate 410 and the second electrode plate 420.

In an embodiment, the first electrode plate 410 may include a first substrate 412, a first active material layer 414, a first ceramic coating layer 416, and a second active material layer 418. The first active material layer 414 may be placed on a first side of the first substrate 412, and the second active material layer 418 may be placed on a second side of the first substrate 412 opposite the first side. In addition, the first ceramic coating layer 416 may be placed on the first active material layer 414. The first ceramic coating layer 416 may be placed concurrently (e.g., at the same or substantially the same time) as the second active material layer 418 is placed.

In an embodiment, the configuration of the second electrode plate 420 may be the same as or similar to that of the first electrode plate 410. For example, the second electrode plate 420 may include a second substrate 422, a third active material layer 424 placed on a first side of the second substrate 422, a second ceramic coating layer 426 placed on the third active material layer 424, and a fourth active material layer 428 placed on a second side of the second substrate 422 opposite the first side.

In an embodiment, the first electrode plate 410, the second electrode plate 420, and the separator 430 may be wound together. Accordingly, the electrode assembly 400 may include the wound first electrode plate 410, the second electrode plate 420, and the separator 430. The first sides of the substrates 412, 422, on which the ceramic coating layers 416, 426 are disposed, are disposed in a core-winding direction. For example, the first surface of the first substrate 412 with the first ceramic coating layer 416 and the first surface of the second substrate 422 with the second ceramic coating layer 426 may each be disposed in a core-winding direction. The separator 430 may be disposed in the core-winding direction of each ceramic coating layer 416, 426.

In an embodiment, the thickness of each of the ceramic coating layers 416, 426 may be determined based on the thickness of the separator 430. In more detail, the sum of the thickness of the ceramic coating layer and the thickness of the separator 430 may be constant or substantially constant. For example, the sum of the thickness of the second ceramic coating layer 426 and the thickness of the separator 430 may be 3 µm, but the present disclosure is not limited thereto.

In an embodiment, the separator 430 may include a polyethylene (PE) material. In this case, while the separator 430 of an inexpensive material is used, a heat resistance, a mechanical strength, an ionic conductivity, a chemical resistance, and/or the like of the electrode plate may be supplemented through the ceramic coating layers 416, 426 placed on the electrode plate. However, the material of the separator 430 is not limited thereto.

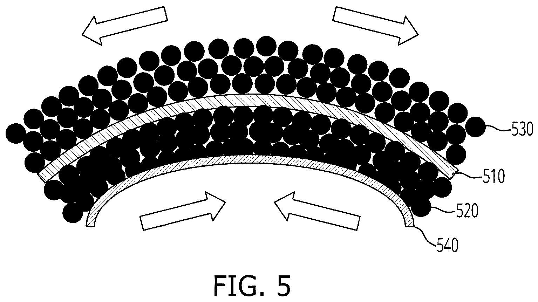

FIG. 5 illustrates an example of a total composition density of a wound electrode plate according to an embodiment of the present disclosure.

In an embodiment, the electrode assembly may include a first electrode plate, a second electrode plate having a polarity different from that of the first electrode plate, and a separator interposed between the first electrode plate and the second electrode plate. The electrode plate (e.g., the first electrode plate or the second electrode plate) may include a substrate 510, a first active material layer 520 placed on a first side of the substrate 510, a second active material layer 530 placed on a second side of the substrate 510 opposite the first side, and a ceramic coating layer 540 placed on the first active material layer 520.

In an embodiment, the first electrode plate, the second electrode plate, and the separator may be wound together to manufacture the electrode assembly. In this case, the first side of the substrate 510 on which the ceramic coating layer 540 is placed may be disposed in a core-winding direction. In this case, a total composition density of the first active material layer 520 may differ from a total composition density of the second active material layer 530. In more detail, the total composition density of the first active material layer 520 may be lower than the total composition density of the second active material layer 530.

When the electrode plate is wound, the first active material layer 520 located in the core-winding direction may shrink, so the total composition density of the first active material layer 520 may increase. On the other hand, the second active material layer 530 located in a direction opposite the core-winding direction may expand more than the first active material layer 520, so the total composition density of the second active material layer 530 may decrease relative to that of the first active material layer 520. Due to the difference in the total composition density, pores of the first active material layer 520 disposed in the core-winding direction decrease, so an injection of electrolyte into the first active material layer 520 may be disadvantageous. As a result, the first active material layer 520 may be more likely to experience a deterioration than the second active material layer 530. In this case, the ceramic coating layer 540 placed on the first active material layer 520 may reduce a short risk that may be caused by the deterioration.

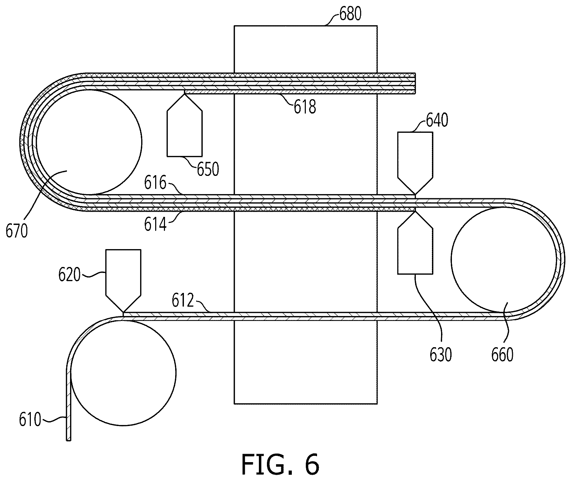

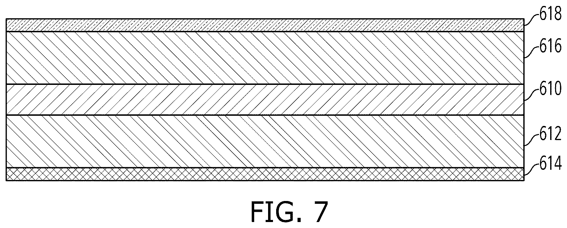

FIG. 6 illustrates an example of a process related to a method for manufacturing an electrode plate according to an embodiment of the present disclosure. FIG. 7 illustrates an example of an electrode plate according to an embodiment of the present disclosure.

In an embodiment, an electrode plate may be formed in the method for manufacturing the electrode plate so that a first active material layer 612 is placed on a first side of a substrate 610. The first active material layer 612 may be placed by coating an active material, discharged from a first coater 620, onto the first side of a substrate 610. For example, if (e.g., when) the electrode plate to be manufactured is a positive electrode plate, the substrate 610 may be a positive substrate (e.g., a positive current collector), and the active material discharged from the first coater 620 may be a positive active material. As another example, if (e.g., when) the electrode plate to be manufactured is a negative electrode plate, the substrate 610 may be a negative substrate (e.g., a negative current collector), and the active material discharged from the first coater 620 may be a negative active material. The first active material layer 612 coated on the first side of the substrate 610 may be dried through a drying furnace 680.

In an embodiment, a first ceramic coating layer 614 may be placed on the first active material layer 612 coated on the first side of the substrate 610. In addition, a second active material layer 616 may be placed on a second side of the substrate 610 opposite the first side. The first ceramic coating layer 614 may be placed by coating a colloidal solution (e.g., a Sol-Gel solution), discharged from a second coater 630, onto the first active material layer 612 coated on the substrate 610. The first ceramic coating layer 614 may be placed using a gravure coating or a spray coating. In addition, the second active material layer 616 may be placed by coating an active material, discharged from a third coater 640, onto the second side of the substrate 610. The active material included in the first active material layer 612 and the active material included in the second active material layer 616 may be the same as each other, but the present disclosure is not limited thereto.

In an embodiment, the first ceramic coating layer 614 and the second active material layer 616 may be placed concurrently (e.g., simultaneously or substantially simultaneously) with each other. In other words, the first ceramic coating layer 614 and the second active material layer 616 may be placed on the substrate 610 through the same process as each other.

In an embodiment, a second ceramic coating layer 618 may be placed on the second active material layer 616 coated on the second side of the substrate 610. The second ceramic coating layer 618 may be placed by coating a colloidal solution (e.g., a Sol-Gel solution), discharged from a fourth coater 650, onto the second active material layer 616 coated on the substrate 610. The second ceramic coating layer 618 may be placed using a gravure coating or a spray coating. The ceramic particles included in the first ceramic coating layer 614 and the ceramic particles included in the second ceramic coating layer 618 may be the same as each other, but the present disclosure is not limited thereto. For example, the second ceramic coating layer 618 may use the same or substantially the same composition as that of the first ceramic coating layer 614.

In an embodiment, the substrate 610 on which the first active material layer 612, the first ceramic coating layer 614, the second active material layer 616, and the second ceramic coating layer 618 are placed may be pressed. In addition, the pressed substrate (e.g., the electrode plate) on which the first active material layer 612, the first ceramic coating layer 614, the second active material layer 616, and the second ceramic coating layer 618 are placed may be cut.

In an embodiment, the first ceramic coating layer 614 and the second active material layer 616 may be concurrently (e.g., simultaneously or substantially simultaneously) dried with each other through the drying furnace 680. Thereafter, the second ceramic coating layer 618 may be dried through the drying furnace 680. In this case, the first active material layer 612, the first ceramic coating layer 614, the second active material layer 616, and the second ceramic coating layer 618 may be dried through the same drying furnace 680. In more detail, after the substrate 610 on which the first active material layer 612 is placed passes through the drying furnace 680, a traveling direction of the substrate 610 may be adjusted by a first roller 660 so that the substrate 610 passes through the drying furnace 680 again. Then, after the substrate 610 on which the first active material layer 612, the first ceramic coating layer 614, and the second active material layer 616 are placed passes through the drying furnace 680, the traveling direction of the substrate 610 may be adjusted by a second roller 670 so that the substrate 610 passes through the drying furnace 680 again. Accordingly, the substrate 610 on which the first active material layer 612, the first ceramic coating layer 614, the second active material layer 616, and the second ceramic coating layer 618 are placed may pass through the drying furnace 680.

In an embodiment, referring to FIG. 7, each of the first ceramic coating layer 614 and the second ceramic coating layer 618 may be a thin film. For example, the thicknesses of the first ceramic coating layer 614 and the second ceramic coating layer 618 may each range from 2 µm to 4 µm, but the present disclosure is not limited thereto. In addition, the thicknesses of the first ceramic coating layer 614 and the second ceramic coating layer 618 may each be smaller than the thicknesses of the first active material layer 612 and the second active material layer 616.

As described above, ceramic coating layers may be placed on both sides (e.g., opposite sides) of the substrate. Accordingly, the safety of a secondary battery including the electrode plate may be improved.

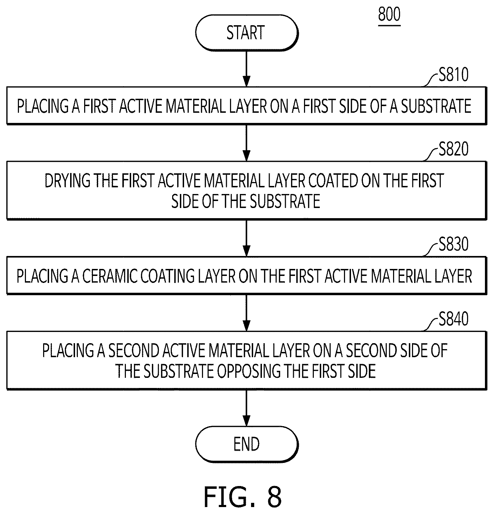

FIG. 8 is a flowchart illustrating an example of a method 800 for manufacturing an electrode plate according to an embodiment of the present disclosure.

In an embodiment, the method 800 for manufacturing an electrode plate may start, and a first active material layer may be placed on a first side of a substrate (S810). In addition, the first active material layer coated on the first side of the substrate may be dried (S820).

Thereafter, a ceramic coating layer may be placed on the first active material layer (S830). Concurrently (e.g., at the same or substantially at the same time), a second active material layer may be placed on a second side of the substrate opposing the first side (S840), and the method 800 may end. The placing of the ceramic coating layer may be performed concurrently (e.g., simultaneously or substantially simultaneously) with the placing of the second active material layer.

In an embodiment, the ceramic coating layer and the second active material layer may be dried concurrently (e.g., simultaneously or substantially simultaneously) with each other. In this case, the first active material layer, the second active material layer, and the ceramic coating layer may be dried through the same drying furnace. The drying furnace that dries the first active material layer and the drying furnace that dry the second active material layer and the ceramic coating layer may be the same as each other.

In an embodiment, the ceramic coating layer may be a thin film. For example, the thickness of the ceramic coating layer may range from 2 µm to 4 µm, but the present disclosure is not limited thereto. In addition, the ceramic coating layer may be placed using a gravure coating or a spray coating.

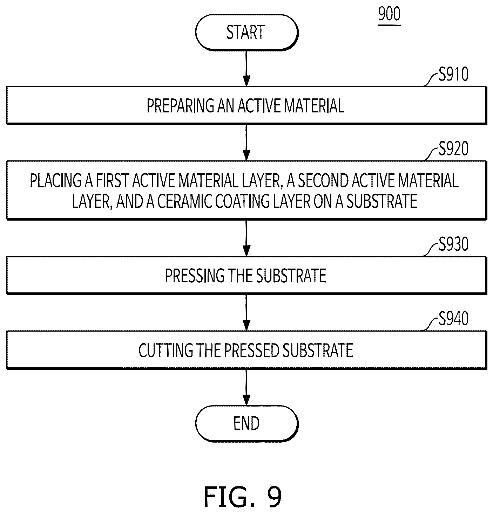

FIG. 9 is a flowchart illustrating an example of a method 900 for manufacturing an electrode plate according to an embodiment of the present disclosure.

In an embodiment, the method 900 for manufacturing an electrode plate may start, and an active material may be prepared (S910). For example, the active material may correspond to a slurry generated by mixing a conductive additive, a binder, and a solvent.

Then, a first active material layer, a second active material layer, and a ceramic coating layer may be placed on a substrate (e.g., a positive substrate or a negative substrate) (S920). In more detail, the first active material layer may be placed on a first side of the substrate. In addition, while the second active material layer is placed on a second side of the substrate opposite the first side, the ceramic coating layer may be placed on the first active material layer.

Thereafter, the substrate on which the first active material layer, the second active material layer, and the ceramic coating layer are placed may be pressed (S930). For example, the pressed electrode plate may be a dried electrode plate in which the first active material layer, the second active material layer, and the ceramic coating layer have been dried. For example, the pressed electrode plate may correspond to a dried electrode plate, in which the first active material layer, the second active material layer, and the ceramic coating layer have been placed. The substrate, on which the first active material layer, the second active material layer, and the ceramic coating layer are placed and pressed, may be cut according to desired specifications (e.g., predetermined specifications) (S940), and the method 900 may end.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### Description of Some Symbols

110: substrate
112: first active material layer
114: ceramic coating layer
116: second active material layer
120: first coater
130: second coater
140: third coater
150: roller
160: drying furnace

## Claims

1. A method for manufacturing an electrode plate, comprising:
placing a first active material layer (112) on a first side of a substrate (110);
drying the first active material layer (112) coated on the first side of the substrate (110);
placing a first ceramic coating layer (114) on the first active material layer (112); and
placing a second active material layer (116) on a second side of the substrate (110) opposite the first side.

2. The method according to claim 1, wherein the placing of the first ceramic coating layer (114) and the placing of the second active material layer (116) are performed concurrently with each other.

3. The method according to any of claims 1 or 2, further comprising concurrently drying the first ceramic coating layer (114) and the second active material layer (116) with each other.

4. The method according to claim 3, wherein the first active material layer (112), the second active material layer (116), and the first ceramic coating layer (114) are dried through a same drying furnace (160).

5. The method according to any of claims 1 to 4, wherein the first ceramic coating layer (114) comprises a thin film.

6. The method according to any of claims 1 to 5, wherein a thickness of the first ceramic coating layer (114) ranges from 2 µm to 4 µm.

7. The method according to any of claims 1 to 6, wherein the first ceramic coating layer (114) is placed using a gravure coating or a spray coating, and/or wherein the first ceramic coating layer (114) is placed by coating a colloidal solution onto the first active material layer (112).

8. The method according to any of claims 1 to 7, the method further comprising pressing the substrate (110) on which the first active material layer (112), the second active material layer (116), and the first ceramic coating layer (114) are placed.

9. The method according to claim 8, the method further comprising cutting the pressed substrate (110).

10. The method according to any of claims 1 to 9, the method further comprising placing a second ceramic coating layer (618) on the second active material layer (116).

11. An electrode assembly (310, 400) comprising:
a first electrode plate (311a, 311b, 410), the first electrode plate (311a, 311b, 410) preferably being manufactured according to any of claims 1 to 10 ;
a second electrode plate (312a, 312b, 420), the second electrode plate (312a, 312b, 420) having a polarity different from that of the first electrode plate (311a, 311b, 410) and preferably being manufactured according to any of claims 1 to 10; and
a separator (313, 430) interposed between the first electrode plate (311a, 311b, 410) and the second electrode plate (312a, 312b, 420),
wherein the first electrode plate (311a, 311b, 410) comprises:
a substrate (110, 412) ,
a first active material layer (112, 414) on a first side of the substrate (110, 412),
a second active material layer (116, 418) on a second side of the substrate (110, 412) opposite the first side, and
a first ceramic coating layer (114, 416) on the first active material layer (112, 414).

12. The electrode assembly (310, 400) according to claim 11, wherein the first electrode plate (311a, 311b, 410), the second electrode plate (312a, 312b, 420), and the separator (313, 430) are wound together, and the first side of the substrate (110, 412) on which the first ceramic coating layer (114, 416) is located faces a core-winding direction.

13. The electrode assembly (310, 400) according to any of claims 11 or 12, wherein a total composition density of the first active material layer (112, 414, 520) is different from a total composition density of the second active material layer (116, 418, 530).

14. The electrode assembly (310, 400) according to any of claims 11 to 13, wherein the total composition density of the first active material layer (112, 414, 520) is lower than the total composition density of the second active material layer (116, 418, 530).

15. The electrode assembly (310, 400) according to any of claims 11 to 14, wherein the first electrode plate (311a, 311b, 410) corresponds to a dry electrode plate.
